# EUROPÄISCHE PATENTSCHRIFT

(11) **EP 3 099 978 B1**
(45) Veröffentlichungstag und Bekanntmachung des Hinweises auf die Patenterteilung: **13.06.2018**
(21) Anmeldenummer: 15711728.4
(22) Anmeldetag: 19.03.2015
(51) Int. Cl.: F23R 3/04, F23R 3/42, F02C 7/08, F02C 7/18

(54) **SILOBRENNKAMMER FÜR EINE GASTURBINE**
SILO COMBUSTION CHAMBER FOR A GAS TURBINE
TURBINE À GAZ AVEC UNE CHAMBRE DE COMBUSTION DE TYPE SILO

(30) Priorität: 31.03.2014 EP 14162721
(43) Veröffentlichungstag der Anmeldung: 07.12.2016
(73) Patentinhaber: Siemens Aktiengesellschaft, 80333 München (DE)
(72) Erfinder: WILKE, Martin, 45276 Essen (DE)
(86) Internationale Anmeldenummer: PCT/EP2015/055799
(87) Internationale Veröffentlichungsnummer: WO 2015/150095

(56) Entgegenhaltungen:
- EP-A1- 0 405 730
- EP-A2- 1 433 924
- GB-A- 2 044 361
- JP-A- 2002 317 649
- JP-A- 2008 115 777
- US-A- 4 356 698
- US-A- 5 819 540

## Beschreibung

Die Erfindung betrifft eine Silobrennkammer für eine Gasturbine, umfassend ein durch eine innere Wandung und einen Flammrohrboden gebildetes Flammrohr, welches einen Brennraum begrenzt, eine äußere Wandung, welche die innere Wandung unter Ausbildung eines Hohlraumes umgibt, und eine Anzahl von Brennern, welche jeweils ausgangsseitig durch eine Öffnung im Flammrohrboden in den Brennraum münden.

In einer Gasturbine wird die Verbrennungswärme eines Brennstoffes in mechanische Arbeit umgewandelt. Der thermodynamische Kreisprozess, welcher diese Umwandlung beschreibt, entspricht näherungsweise dem Joule-Kreisprozess.

Dabei wird zunächst ein sauerstoffhaltiges Arbeitsgas, in der Praxis meist Luft, von einer Verdichterkammer verdichtet, wobei es sich von einer Ausgangstemperatur *T₁* auf *T₂* erwärmt, und der Druck steigt. Im zweiten Schritt wird dem Arbeitsgas in einer Brennkammer bei konstantem Druck durch Verbrennen des zugemischten Brennstoffes Wärme zugeführt, wodurch die Temperatur weiter auf *T₃* ansteigt. Das verdichtete, erhitzte Arbeitsgas verrichtet dann mechanische Arbeit, indem es expandiert und dabei über Schaufeln die Turbine antreibt. Hierbei sinkt die Temperatur auf *T₄*. Auch der Druck sinkt. Ein Teil der mechanischen Arbeit, welche an der Turbine gewonnen wird, kann zur Verdichtung im ersten Schritt herangezogen werden. In einem letzten Schritt wird dem Arbeitsgas bei konstantem Druck durch Kühlung Abwärme entzogen, wodurch die Temperatur wieder auf *T₁* absinkt. Für die Näherung eines idealen Gases ergibt sich hierbei der Wirkungsgrad des Prozesses zu *η*=1-(*T*₄*-T*₁)/(*T*₃-*T*₂).

Aufgrund der starken Zunahme regenerativer Energieerzeugung in immer mehr Industrieländern kommt Wärmekraftwerken, welche Gasturbinen einsetzen, eine immer höhere Bedeutung zu. Die fehlende Planungssicherheit, welche eine Energieerzeugung durch Solarenergie oder Windkraft aus naturgegebenen Gründen mit sich bringt, muss durch ausreichende Reservekapazitäten in der Erzeugung ausgeglichen werden, welche zudem möglichst schnell die angeforderte Leistung bereitzustellen imstande sind. Hier sind Kraftwerke, welche mit Gasturbinen betrieben werden, infolge der Flüchtigkeit des verwendeten Brennstoffes gegenüber den thermodynamisch trägeren Kohlekraftwerken oder gar Kernreaktoren deutlich im Vorteil.

Der Wirkungsgrad einer Gasturbine als Quotient der erzeugten Energie über den totalen Energieinhalt des eingesetzten Brennstoffes beträgt selbst bei einer modernen Anlage deutlich unter 50%, da die durch Verbrennung zugeführte Wärme als Abwärme wieder abgeführt wird, und somit der Energieinhalt der Abwärme nach der Expansion des Arbeitsgas nicht mehr genutzt wird.

Der Wirkungsgrad kann jedoch durch Nutzung dieser Abwärme erhöht werden, indem beispielsweise in einem zweiten Kreislauf durch die Abwärme eine Dampfturbine eines zweiten Wärmekraftwerkes betrieben wird (sogenannte "combined cycle"- oder "Gas-und-Dampf"-Technologie). Hierdurch kann der Wirkungsgrad um den Grad der Abwärme, welche der Dampfturbine zugeführt werden kann, verbessert werden. Für diese Verbesserung des Wirkungsgrades steigt jedoch der Systemaufwand an, da nun der gesamte Dampfkreislauf an die Gasturbine anzubinden und regelungstechnisch auf diese abzustimmen ist, wodurch sich die Investitionskosten einer Anlage erhöhen. Überdies können viele bereits existierende Wärmekraftwerke mit Gasturbinen aufgrund der Dimensionen der Komponenten eines Dampfkreislaufes nicht ohne Weiteres mit einem solchen nachgerüstet werden.

Eine mögliche weiterführende Lösung kann hierbei sein, die Abwärme des Abgases der Gasturbine durch die Einbindung in einen Rekuperatorprozess dazu zu nutzen, das im ersten Schritt vorverdichtete Arbeitsgas weiter zu erwärmen, bevor die Verbrennungswärme des Brennstoffes zugeführt wird. Da in vielen Gasturbinen die Temperatur *T₂* des vorverdichteten Arbeitsgases unter der Abwärmetemperatur *T₄* liegt, muss im idealen Modell die dieser Differenz *T₄ -T₂* entsprechende Wärmemenge dem Arbeitsgas nicht durch den Energieinhalt des Brennstoffes zugeführt werden, sondern kann eingespart werden, was zu einer entsprechenden Erhöhung des Wirkungsgrades führt.

Ein ungelöstes Problem stellt hierbei die technische Umsetzung der Einbindung insbesondere eines bestehenden Gasturbinen-Systems in einen Rekuperatorprozess dar, wobei der Rückführung des Arbeitsgases vom Wärmetauscher hierbei eine besondere Rolle zukommt.

Es ist Aufgabe der Erfindung, in einer Gasturbine das Arbeitsgas auf möglichst einfache Weise von einem Wärmetauscher zurückzuführen.

Die Aufgabe wird erfindungsgemäß gelöst durch eine Silobrennkammer für eine im Betrieb an einen Wärmetauscher koppelbare Gasturbine gemäss Anspruch 1, umfassend ein durch eine innere Wandung und einen Flammrohrboden gebildetes Flammrohr, welches einen Brennraum begrenzt, eine äußere Wandung, welche die innere Wandung unter Ausbildung eines Hohlraumes umgibt, eine die äußere Wandung zumindest abschnittsweise umlaufende Ringkammer, welche eine Anzahl von Zuleitungen aufweist, wobei die Zuleitungen im Betrieb der Gasturbine strömungstechnisch mit der Warmseite eines Wärmetauschers koppelbar sind, und eine Anzahl von Brennern, welche jeweils ausgangsseitig durch eine Öffnung im Flammrohrboden in den Brennraum münden und deren Sauerstoffversorgung strömungstechnisch mit der Ringkammer verbunden sind.

Unter der Warmseite des Wärmetauschers ist hierbei die Gesamtheit der Ableitungen aus dem Bereich, in welchem im Wärmetauscher die Wärmeübertragung zwischen dem diesen durchströmenden Arbeitsgas und der Wärmezufuhr stattfindet, zu verstehen. Insbesondere kann hierbei dem Wärmetauscher Wärme durch die Abwärme der Gasturbine zugeführt werden, und insbesondere kann die Gasturbine einen Verdichter aufweisen, von welchem aus dem Wärmetauscher ein Anteil des Arbeitsgases zur Erwärmung zugeführt wird. Eine Silobrennkammer gemäss dem Oberbegriff des Anspruchs 1 ist aus EP405730A bekannt. Der Erfindung liegen hierbei folgende Überlegungen zugrunde: Die Konzeption einer Gasturbine erfordert komplexe strömungs- und werkstofftechnische sowie thermodynamische Modellierungen und numerische Berechnungen, welche zu einem Großteil durch Praxistest an Prototypen verifiziert werden müssen. Jede Modifikation an einem bestehenden Gasturbinen-System erfordert somit auch eine Anpassung der besagten Modellierungen und Berechnungen. Es ist somit von erheblichem Vorteil, einen Mechanismus zur Rückführung des Arbeitsgases von einem Wärmetauscher zu einer Brennkammer a priori so zu gestalten, dass er unter möglichst geringen baulichen Veränderungen in ein bestehendes Konzept einer Gasturbine integriert werden kann. Überdies wird hierdurch auch die Möglichkeit eröffnet, eine bereits in Betrieb genommene Gasturbine, bei welcher kein Wärmetauscher vorgesehen ist, unter vergleichsweise geringem Aufwand nachzurüsten.

Unter der Vorgabe möglichst geringer Modifikationen ist es somit vorteilhaft, das Flammrohr, welches im Konzeptionsprozess aufgrund der hohen Temperaturen bei der Verbrennung des Gemisches aus Arbeitsgas und Brennstoff und der gewünschten Weiterleitung des so erzeugten Abgases an eine Expansionsturbine eine besonders komplexe Komponente darstellt, in seiner Geometrie nicht zu verändern. Die innere Wandung und der Flammrohrboden bleiben somit unverändert.

Für eine möglichst geringe Modifikation der äußeren Wandung ist zu beachten, dass der Hohlraum zwischen der inneren Wandung und der äußeren Wandung bevorzugt mit einem Anteil des von einem Verdichter der Gasturbine vorverdichteten Arbeitsgases beaufschlagt ist, um somit insbesondere die innere Wandung, welche im Betrieb den hohen Verbrennungstemperaturen im Brennraum ausgesetzt ist, von außen zu kühlen. Bevorzugt ist dies bei der Rückführung des Arbeitsgases von einem Wärmetauscher zu berücksichtigen. Ebenso ist zu berücksichtigen, dass, falls das Arbeitsgas vom Wärmetauscher zu einer Mehrzahl an Brennern zurückgeführt werden soll, für eine gleichmäßige Verbrennung des mit dem Arbeitsgas gemischten Brennstoffes das Arbeitsgas der jeweiligen Sauerstoffversorgung der einzelnen Brennern als möglichst gleichmäßiger Massestrom unter möglichst gleichmäßigem Druck zuzuführen ist.

Eine für die Erfindung zentrale Erkenntnis ist nun, außerhalb der äußeren Wandung eine diese zumindest abschnittsweise umlaufende Ringkammer vorzusehen, welche eine Anzahl von Zuleitungen aufweist, über welche im Betrieb der Gasturbine von der Warmseite des Wärmetauschers das Arbeitsgas in Richtung der Brenner zurückgeführt werden kann. Mittels der Ringkammer ist die Möglichkeit gegeben, das Arbeitsgas unter möglichst homogenem Druck der jeweiligen Sauerstoffversorgung mehrere Brenner zuzuführen. Die strömungstechnische Verbindung von der Ringkammer zu einem Brenner kann dabei so gestaltet werden, dass die äußere Wandung nur geringfügig modifiziert werden muss.

Bevorzugt bildet die Ringkammer hierbei einen offenen Ring, d.h., die Ringkammer umläuft die äußere Wandung nicht vollständig. Dies kann je nach Anzahl der Zuleitungen und der Ausgestaltung der Verbindungen zu dem oder jedem Brenner strömungstechnisch von Vorteil sein. Insbesondere bei einer Zuleitung und einer Mehrzahl von Verbindungen zu Brennern wird somit in der Ringkammer eine ungewollte Turbulenz erschwert. Erfindungsgemäss umfasst die Silobrennkammer eine Sammelkammer, welche über dem Flammrohrboden angeordnet ist, und eine Anzahl von Verbindungsstücken, wobei die Ringkammer mit der Sammelkammer über das oder jedes Verbindungsstück verbunden ist, und der oder jeder Brenner zur Sauerstoffversorgung strömungstechnisch mit der Sammelkammer verbunden ist, und wobei der Hohlraum zwischen der inneren Wandung und der äußeren Wandung lokal strömungstechnisch von der Sammelkammer getrennt ist.

Unter einer lokalen strömungstechnischen Trennung ist zu verstehen, dass in der Silobrennkammer selbst oder in ihrer unmittelbaren Umgebung keine strömungstechnische direkte Verbindung zwischen der Sammelkammer und dem Hohlraum existiert, welche nicht durch einen Brenner führen würde. Im Folgenden ist unter einer Trennung, soweit nichts anderes spezifiziert ist, immer eine lokale strömungstechnische Trennung in einem zu obigen Ausführungen analogen Sinn zu verstehen.

Mittels der über dem Flammrohrboden angeordneten Sammelkammer, welche den oder jeden Brenner zumindest teilweise umgibt, lässt sich eine besonders gleichmäßige Druckverteilung im Bereich des oder jedes Brenners erreichen. Dies ist insbesondere bei einer Mehrzahl an Brennern vorteilhaft, da in diesem Fall die Sauerstoffversorgung jedes Brenners vom Arbeitsgas, welches vom Wärmetauscher erwärmt zurückgeführt wird, im Wesentlichen mit demselben Druck beaufschlagt wird, was eine gleichmäßige Verbrennung begünstigt.

Da der Hohlraum zwischen der inneren Wandung und der äußeren Wandung bevorzugt mit einem Anteil des von einem Verdichter der Gasturbine vorverdichteten Arbeitsgases beaufschlagt ist, wird durch die Trennung der Sammelkammer vom Hohlraum verhindert, dass sich dieser Anteil des Arbeitsgases mit dem Arbeitsgas in der Sammelkammer mischten kann, welches bereits vom Wärmetauscher erwärmt wurde, was sonst zu Verlusten im Wirkungsgrad führen würde. Bevorzugt ist hierbei der Flammrohrboden ein- oder beidseitig mit einem besonders hitzebeständigen Material zu verstärken.

In einer alternativen Ausgestaltung der Erfindung umfasst die Silobrennkammer eine der Anzahl von Brennern entsprechende Anzahl von Stutzen, welche jeweils mit der Ringkammer verbunden sind, wobei der Hohlraum sich über den Flammrohrboden erstreckt, und wobei der oder jeder Brenner von einem durch die äußere Wandung zur jeweiligen Öffnung im Flammrohrboden geführten Stutzen derart umschlossen ist, dass seine Sauerstoffversorgung strömungstechnisch mit der Ringkammer verbunden und vom Hohlraum lokal strömungstechnisch getrennt ist.

Durch eine direkte Verbindung der Sauerstoffversorgung eines Brenners mit der Ringkammer über den entsprechenden Stutzen lässt sich die Rückführung des Arbeitsgases vom Wärmetauscher besonders ökonomisch konzipieren. Es werden hierfür nur maßgebliche konstruktive Veränderungen in der äußeren Wandung erfordert, durch welche der jeweilige Stutzen zu führen ist. Dadurch, dass der Hohlraum sich über den Flammrohrboden erstreckt, kann dieser ebenso vom durch einen Verdichter der Gasturbine vorverdichteten Arbeitsgas gekühlt werden, wie die innere Wandung. Somit entstehen, verglichen mit bestehenden Konzepten, keine erhöhten Anforderungen an die thermische Belastbarkeit des Flammrohrbodens.

Bevorzugt weist hierbei der oder jeder Stutzen wenigstens einen Dehnungskompensator auf. Durch einen Dehnungskompensator können Wärmespannungen an einem Stutzen ausgeglichen werden, welche durch die unterschiedlichen Temperaturen des Arbeitsgases innerhalb des Stutzens und des Arbeitsgases, welches im Hohlraum den Stutzen von außen umströmt, entstehen können. Das vorverdichtete Arbeitsgas im Hohlraum kann Temperaturen von 350°C-400°C aufweisen, während der Wärmetauscher das Arbeitsgas auf bis zu 550°C erwärmt.

Als weiter vorteilhaft erweist es sich hierbei, wenn der Flammrohrboden eine Vielzahl von Bohrungen aufweist. Durch derartige Bohrungen kann vorverdichtetes Arbeitsgas aus dem Hohlraum infolge der Druckdifferenz in geringen Mengen in den Brennraum strömen, wo es zur Kühlung des Materials des Flammrohrbodens beiträgt. Dies reduziert die Temperatur für die Werkstoffe, welche für den Flammrohrboden verwendet werden, ausgelegt werden sollten.

Bevorzugt weist die innere Wandung eine Vielzahl von Bohrungen auf. Dies reduziert die Temperatur für die Werkstoffe, welche für die innere Wandung verwendet werden, ausgelegt werden sollten.

Günstigerweise ist das Flammrohr im Wesentlichen zylinderförmig. Hierunter ist geometrisch ein senkrechter Zylinder zu verstehen, dessen Grundfläche rotations- oder hochzählig drehsymmetrisch ist. Eine derartige Geometrie erlaubt eine besonders einfache Konstruktion bei einer vergleichsweise vorteilhaften Druckverteilung sowohl im Hohlraum als auch im Brennraum.

Insbesondere ist hierbei die Anordnung des oder jedes Brenners im Flammrohrboden drehsymmetrisch, was sich günstig auf die Druckverteilung im Brennraum auswirkt und einen gleichmäßigen Massestrom in jedem Brenner begünstigt. Dies ist vorteilhaft für die Expansion des mit Brennstoff gemischten, verbrannten Arbeitsgases, und trägt somit zu einem vorteilhaften Wirkungsgrad bei.

In einer weiter vorteilhaften Ausgestaltung der Erfindung wird umfasst die äußere Wandung eine auf die äußere Wandung geflanschte Haube, welche sich über den Bereich über dem Flammrohrboden erstreckt. Insbesondere lassen sich durch eine solche Haube eine Brennstoffleitung zu einem Brenner und Stutzen von der Ringkammer zu einem Brenner oder Verbindungsstücke von der Ringkammer zur Sammelkammer führen sowie weitere Öffnungen für den Überstand des oder jedes Brenners vorsehen. Diese Maßnahmen vereinfachen insbesondere das Nachrüsten einer bestehenden Gasturbine zur Verwendung mit einem Wärmetauscher.

Die Erfindung gibt weiter eine Gasturbine und ein Wärmekraftwerk mit einer entsprechenden Gasturbine an. Die Gasturbine umfasst hierbei wenigstens eine Silobrennkammer der vorbeschriebenen Art, und einen insbesondere als Rekuperator ausgebildeten Wärmetauscher, wobei der Verdichter der Gasturbine strömungstechnisch mit der Kaltseite des Rekuperators verbunden ist, und wobei die Warmseite des Rekuperators über die oder jede Zuleitung strömungstechnisch mit der Ringkammer verbunden ist.

Die für die Silobrennkammer und ihre Weiterbildungen genannten Vorteile können dabei sinngemäß auf die Gasturbine und auf das die Gasturbine umfassende Wärmekraftwerk übertragen werden.

Nachfolgend werden mitunter Ausführungsbeispiele der Erfindung anhand einiger Zeichnungen näher erläutert. Hierbei zeigen jeweils schematisch:
- FIG 1: in einer Querschnittdarstellung eine Silobrennkammer mit einer Ringkammer und einer mit dieser verbundenen Sammelkammer,
- FIG 2: in einer Querschnittdarstellung eine Silobrennkammer mit einer Ringkammer, von welcher aus Stutzen zu den einzelnen Brennern führen,
- FIG 3: in einer Draufsicht eine Silobrennkammer mit einer als offenem Ring ausgebildeten Ringkammer, und
- FIG 4: in einer Draufsicht ein Wärmekraftwerk mit einer Gasturbine.

Einander entsprechende Teile und Größen sind in allen Figuren jeweils mit gleichen Bezugszeichen versehen.

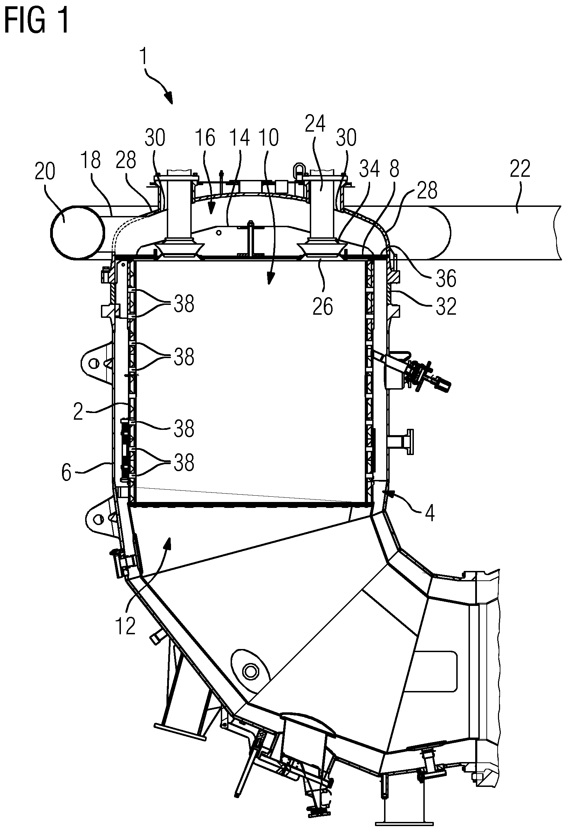

In FIG 1 ist in einer Querschnittsdarstellung eine Silobrennkammer 1 für eine nicht näher dargestellte Gasturbine gezeigt. Die Silobrennkammer 1 umfasst eine innere Wandung 2, welche unter Ausbildung eines Hohlraumes 4 von einer äußeren Wandung 6 umgeben ist. Die innere Wandung 2 begrenzt mit dem daran anschließenden Flammrohrboden 8 den im Wesentlichen zylinderförmigen Brennraum 10 des Flammrohres 12. Auf der dem Brennraum 10 abgewandten Seite des Flammrohrbodens 8, welcher dort durch ein Stützgerüst 14 verstärkt ist, ist eine Sammelkammer 16 angeordnet, welche über Verbindungsstücke 18 mit einer Ringkammer 20 verbunden ist, die die Silobrennkammer 1 außerhalb der äußeren Wandung 6 umläuft. Zur Ringkammer 20 führt eine Zuleitung 22 von einem in der Zeichnung nicht dargestellten Rekuperator. Die Brenner 24 münden von der Sammelkammer 16 durch Öffnungen 26 in den Brennraum 10.

Die Sammelkammer 16 wird oberhalb der Brenner 24 durch eine aufgeflanschte Haube 28 begrenzt, in welcher Ausnehmungen 30 für die Brenner 24 vorgesehen sind, und von welcher die Verbindungsstücke 18 zur Ringkammer 20 führen. In dieser Ausgestaltung ist die Haube 28 auf einen umlaufenden Ring 32 aufgeflanscht, wobei die Haube 28 und der Ring 32 jeweils als Teil der äußeren Wandung 6 aufzufassen sind. Durch die Sammelkammer 16 und die Verbindungsstücke 18 erhöht sich im Vergleich zu einer Ausgestaltung ohne Rekuperator der notwendige Bauraum über dem Flammrohrboden 8. Die notwendige Höhe wird hier durch den Ring 32 gewonnen.

Von einem nicht näher dargestellten Verdichter der Gasturbine wird ein Teil des vorverdichteten Arbeitsgases einem Rekuperator zugeführt und von diesem erwärmt. Durch die Zuleitung 22 wird das vom Rekuperator erwärmte Arbeitsgas in die Ringkammer 20 geleitet, von wo es über die Verbindungsstücke 18 in die Sammelkammer 16 gelangt, und dort in die jeweilige Sauerstoffversorgung 34 der Brenner 24 strömen kann. In den Brennern 24 wird das verdichtete, vom Rekuperator erwärmte Arbeitsgas mit einem Brennstoff vermischt und in den Brennraum 10 des Flammrohres 12 verbrannt, wobei die Abgase und die Abwärme über das Flammrohr 12 zum Rekuperator abgeführt werden, wo mit der Abwärme das vorverdichtete Arbeitsgas erwärmt wird.

Ein weiterer Teil des vorverdichteten Arbeitsgases wird in nicht näher dargestellter Art in den Hohlraum 4 geleitet. Der Hohlraum 4 ist gegen die Sammelkammer 16 durch den Flammrohrboden 8 verlängernde Schottbleche 36 abgegrenzt. Kleine Bohrungen 38 in der inneren Wandung 2 bis zur Höhe der Schottbleche 36 können hierbei helfen, die innere Wandung 2 zu kühlen. Das vorverdichtete Arbeitsgas, welches durch den Hohlraum 4 strömt, kann Temperaturen von 300°C-400°C aufweisen. Die Temperatur im Bereich der Brenner 24 kann über 1400°C betragen. Das Material des Flammrohrbodens 8 und der inneren Wandung 2 muss für die entstehenden Brenntemperaturen ausgelegt sein, was zu Kosten, z.B. für Keramikplatten, führt.

Das durch die Bohrungen 38 in der inneren Wandung 2 in den Brennraum 10 strömende vorverdichtete Arbeitsgas kühlt durch das Temperaturgefälle die innere Wandung 2 in diesem Bereich, so dass die Werkstoffe dort für einen geringeren Temperaturbereich ausgelegt werden können. Die Bohrungen 38 sind hierbei so fein auszugestalten, dass die Menge des die Bohrungen 38 zur Kühlung der inneren Wandung 2 durchströmende Arbeitsgases möglichst gering ist (unter Randbedingung einer gewünschten Mindestkühlleistung), und dass insbesondere kein nennenswerter Druckverlust im Hohlraum 4 stattfindet. Da das vom Rekuperator erwärmte Arbeitsgas eine Temperatur von bis zu 600°C aufweisen kann, wäre die Kühlwirkung durch entsprechende Bohrungen im Flammrohrboden 8 geringer, weswegen es hier vorzuziehen ist, das Material des Flammrohrbodens 8 anderweitig für die hohen Brenntemperaturen auszulegen.

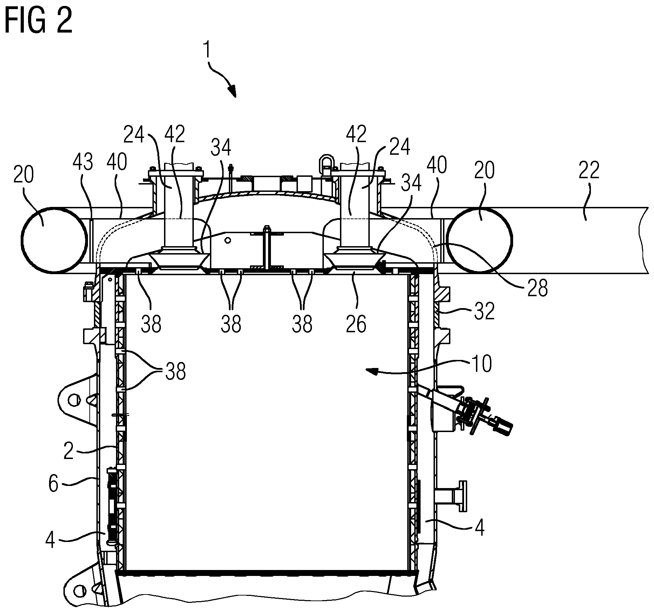

In FIG 2 ist in einer Querschnittsdarstellung eine weitere mögliche Ausgestaltung einer Silobrennkammer 1 für eine nicht näher dargestellte Gasturbine gezeigt. Der Hohlraum 4, welcher zwischen der inneren Wandung 2 und der äußeren Wandung 6 gebildet wird, erstreckt sich hierbei über den Flammrohrboden 8. Von der Ringkammer 20 führen Stutzen 40, welche durch die auf den Ring 32 geflanschte Haube 28 geführt sind, zu je einem Brenner 24. Der Stutzen 40 umschließt dabei die Sauerstoffversorgung 34 des jeweiligen Brenners 24 bis zu dessen Öffnung 26 in den Brennraum 10 hin, so dass die Sauerstoffversorgung 34 lokal strömungstechnisch vom Hohlraum 4 getrennt ist. Das vom Rekuperator erwärmte, vorverdichtete Arbeitsgas wird somit über die Zuleitung 22, die Ringkammer 20 und den entsprechenden Stutzen 40 direkt der Sauerstoffversorgung 34 des jeweiligen Brenners 24 zugeleitet. Durch eine Ausnehmung 42 im Stutzen 40 kann der jeweilige Brenner 24 mit einer Brennstoffversorgung verbunden werden. Um die bei den unterschiedlichen Temperaturen innerhalb und außerhalb des Stutzens 40 auftretenden Wärmespannungen besser aufzunehmen, ist in jeden Stutzen ein Dehnungskompensator 43 integriert.

In dieser Ausgestaltung kann auch der Flammrohrboden 8 kleine Bohrungen 38 zur Kühlung des Materials aufweisen.

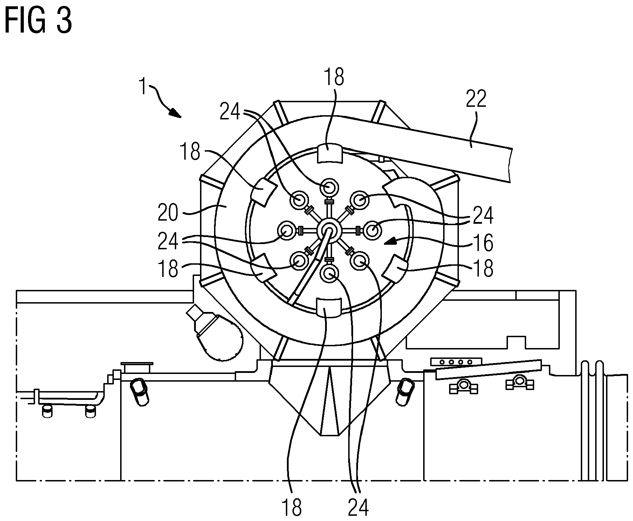

In FIG 3 ist in einer Draufsicht eine Silobrennkammer 1 mit einer als offenem Ring ausgebildeten Ringkammer 20 gezeigt. Von der an die Zuleitung 22 angeschlossenen Ringkammer 20 führen sechs umlaufend angeordnete Verbindungsstücke 18 zur Sammelkammer 16, in welcher acht Brenner 24 angeordnet sind.

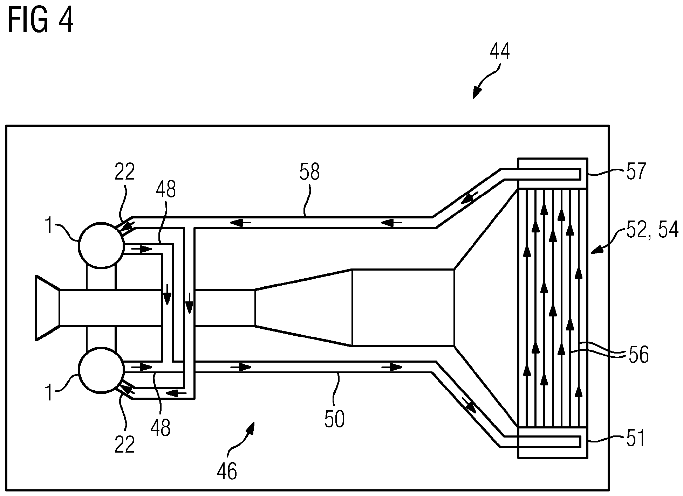

In FIG 4 ist in einer schematischen Draufsicht ein Wärmekraftwerk 44 mit einer Gasturbine 46 dargestellt, welche zwei Silobrennkammern 1 aufweist. Von den jeweils nicht näher dargestellten Hohlräumen führt über Ableitungen 48 ein Leitungssystem 50 zu einer Kaltseite 51 des als Rekuperator 52 ausgebildeten Wärmetauschers 54. In diesem wird in feinen Rohren 56, welche hier schematisch angezeigt sind, das vorverdichtete Arbeitsgas, welches über das Leitungssystem 50 dem Rekuperator 52 zugeführt wird, durch die Abwärme des Verbrennungsprozesses der Gasturbine 46 erwärmt. Das erwärmte Arbeitsgas wird von der Warmseite 57 des Rekuperators 52 über ein Leitungssystem 58 den jeweiligen Zuleitungen 22 der Silobrennkammern 1 zugeführt, wo es jeweils in die Sammelkammer gelangt, und dort zur Sauerstoffversorgung der Brenner strömt, wo es mit dem Brennstoff vermischt und in den Brennraum verbrannt wird. Hierbei wird die Abwärme erzeugt, welche im Rekuperator 52 das vorverdichtete Arbeitsgas erwärmt. Die erste Sammelkammer, die Brenner, deren Sauerstoffversorgung und die Brennräume sind in der Zeichnung nicht näher dargestellt.

Obwohl die Erfindung im Detail durch das bevorzugte Ausführungsbeispiel näher illustriert und beschrieben wurde, ist die Erfindung nicht durch dieses Ausführungsbeispiel eingeschränkt. Andere Variationen können vom Fachmann hieraus abgeleitet werden, ohne den Schutzumfang der Erfindung zu verlassen.

## Patentansprüche

1. Silobrennkammer (1) für eine im Betrieb an einen Wärmetauscher (54) koppelbare Gasturbine (46), umfassend ein durch eine innere Wandung (2) und einen Flammrohrboden (8) gebildetes Flammrohr (12), welches einen Brennraum (10) begrenzt,
eine äußere Wandung (6), welche die innere Wandung (2) unter Ausbildung eines Hohlraumes (4) umgibt,
eine die äußere Wandung (6) zumindest abschnittsweise umlaufende Ringkammer (20), welche eine Anzahl von Zuleitungen (22) aufweist, wobei die Zuleitungen (22) im Betrieb der Gasturbine (46) strömungstechnisch mit der Warmseite (57) eines Wärmetauschers (54) koppelbar sind, und
eine Anzahl von Brennern (24), welche jeweils ausgangsseitig durch eine Öffnung (26) im Flammrohrboden (8) in den Brennraum (10) münden und deren Sauerstoffversorgung (34) strömungstechnisch mit der Ringkammer (20) verbunden sind, wobei, eine Sammelkammer (16) umfasst ist, welche über dem Flammrohrboden (8) angeordnet ist, und eine Anzahl von Verbindungsstücken (18) umfasst, wobei die Ringkammer (20) mit der Sammelkammer (16) über das oder jedes Verbindungsstück (18) verbunden ist, und der oder jeder Brenner (24) zur Sauerstoffversorgung strömungstechnisch mit der Sammelkammer (16) verbunden ist, **dadurch gekennzeichnet, dass** der Hohlraum (4) zwischen der inneren Wandung (2) und der äußeren Wandung (6) lokal strömungstechnisch von der Sammelkammer (16) getrennt ist.

2. Silobrennkammer (1) nach Anspruch 1,
wobei die Ringkammer (20) einen offenen Ring bildet.

3. Silobrennkammer (1) nach einem der vorhergehenden Ansprüche,
wobei die innere Wandung (2) eine Vielzahl von Bohrungen (38) aufweist.

4. Silobrennkammer (1) nach einem der vorhergehenden Ansprüche,
wobei das Flammrohr (8) im Wesentlichen zylinderförmig ist.

5. Silobrennkammer (1) nach Anspruch 4,
wobei die Anordnung des oder jedes Brenners (24) im Flammrohrboden (8) drehsymmetrisch ist.

6. Silobrennkammer (1) nach einem der vorhergehenden Ansprüche,
wobei die äußere Wandung eine aufgeflanschte Haube (28) umfasst, welche sich über den Bereich über dem Flammrohrboden (8) erstreckt.

7. Gasturbine (46), umfassend wenigstens eine Silobrennkammer (1) nach einem der vorhergehenden Ansprüche, und einen insbesondere als Rekuperator (52) ausgebildeten Wärmetauscher (54),
wobei ein Verdichter der Gasturbine (46) strömungstechnisch mit der Kaltseite (51) des Rekuperators (52) verbunden ist, und
wobei die Warmseite (57) des Rekuperators (52) über die oder jede Zuleitung (22) strömungstechnisch mit der Ringkammer (20) verbunden ist.

8. Wärmekraftwerk (44) mit einer Gasturbine (46) nach Anspruch 7.

## Claims

1. Silo combustion chamber (1) for a gas turbine (46) that, in operation, can be coupled to a heat exchanger (54), comprising
a flame tube (12) formed by an inner wall (2) and a flame tube base (8) and bounding a combustion space (10),
an outer wall (6) that surrounds the inner wall (2), forming a cavity (4),
an annular chamber (20) surrounding the outer wall (6) at least in sections and having a number of inflow lines (22), wherein the inflow lines (22) can be fluidically coupled to the hot side (57) of a heat exchanger (54) during operation of the gas turbine (46), and
a number of burners (24) which each open, on the outlet side, into the combustion space (10) via an opening (26) in the flame tube base (8) and whose oxygen supply (34) is fluidically connected to the annular chamber (20), wherein
it comprises a plenum chamber (16) that is arranged above the flame tube base (8), and it comprises a number of connecting parts (18),
wherein the annular chamber (20) is connected to the plenum chamber (16) via the or each connecting part (18), and the or each burner (24) is fluidically connected to the plenum chamber (16) for the purpose of oxygen supply, **characterized in that** the cavity (4) between the inner wall (2) and the outer wall (6) is locally fluidically separated from the plenum chamber (16).

2. Silo combustion chamber (1) according to Claim 1,
wherein the annular chamber (20) forms an open ring.

3. Silo combustion chamber (1) according to one of the preceding claims,
wherein the inner wall (2) has a multiplicity of bores (38) .

4. Silo combustion chamber (1) according to one of the preceding claims,
wherein the flame tube (12) is essentially cylindrical.

5. Silo combustion chamber (1) according to Claim 4,
wherein the arrangement of the or each burner (24) in the flame tube base (8) is rotationally symmetric.

6. Silo combustion chamber (1) according to one of the preceding claims,
wherein the outer wall comprises a flanged-on hood (28) that extends over the region above the flame tube base (8) .

7. Gas turbine (46), comprising at least one silo combustion chamber (1) according to one of the preceding claims, and a heat exchanger (54) that is in particular designed as a recuperator (52),
wherein a compressor of the gas turbine (46) is fluidically connected to the cold side (51) of the recuperator (52), and
wherein the hot side (57) of the recuperator (52) is fluidically connected to the annular chamber (20) via the or each inflow line (22).

8. Thermal power plant (44) having a gas turbine (46) according to Claim 7.

## Revendications

1. Chambre de combustion (1) de type silo pour une turbine (46) à gaz pouvant être couplée à un échangeur de chaleur (54), comprenant
un tube (12) de flamme, qui est formé d'une paroi (2) intérieure et d'un fond (8) de tube de flamme et qui délimite un espace (10) de combustion,
une paroi (6) extérieure, qui entoure la paroi (2) intérieure avec formation d'un espace (4) vide,
une chambre (20) annulaire, qui fait le tour, au moins par tronçon, de la paroi (6) extérieure et qui a un certain nombre de conduits (22) d'arrivée, les conduits (22) d'arrivée pouvant être, lorsque la turbine (46) à gaz est en fonctionnement, reliés fluidiquement au côté (57) chaud d'un échangeur de chaleur (54) et
un certain nombre de brûleurs (24), qui débouchent chacun du côté de la sortie dans l'espace (10) de combustion, par une ouverture (26) du fond (8) du tube de flamme et dont l'alimentation (34) en oxygène est reliée fluidiquement à la chambre (20) annulaire,
dans laquelle
il y a une chambre (16) collectrice, qui est disposée au dessus du fond (8) du tube de flamme et qui comprend un certain nombre de pièces (18) de liaison,
la chambre (20) annulaire étant reliée à la chambre (16) collectrice par la ou par chaque pièce (18) de liaison et le ou chaque brûleur (24) étant, pour l'alimentation en oxygène, relié fluidiquement à la chambre (16) collectrice, **caractérisé en ce que**
l'espace (4) vide, entre la paroi (2) intérieure et la paroi (6) extérieure, est séparé spatialement, du point de vue fluidique, de la chambre (16) collectrice.

2. Chambre de combustion (1) du type à silo suivant la revendication 1,
dans laquelle la chambre (20) annulaire forme un anneau ouvert.

3. Chambre de combustion (1) du type à silo suivant l'une des revendications précédentes,
dans laquelle la paroi (2) intérieure a une pluralité de trous (38).

4. Chambre de combustion (1) du type à silo suivant l'une des revendications précédentes,
dans laquelle le tube (8) de flamme est sensiblement de forme cylindrique.

5. Chambre de combustion (1) du type à silo suivant la revendication 4,
dans laquelle l'agencement du ou de chaque brûleur (24) au fond (8) du tube de flamme est à symétrie de rotation.

6. Chambre de combustion (1) du type à silo suivant l'une des revendications précédentes,
dans laquelle la paroi extérieure comprend une coiffe (28) bridée, qui s'étend sur la partie au dessus du fond (8) du tube de flamme.

7. Turbine (46) à gaz, comprenant une chambre de combustion (1) de type silo suivant l'une des revendications précédentes et un échangeur de chaleur (54) constitué notamment en récupérateur (52),
dans laquelle
un compresseur de la turbine (46) à gaz est relié fluidiquement au côté (51) froid du récupérateur (52) et dans lequel le côté (57) chaud du récupérateur (52) est relié fluidiquement à la chambre (20) annulaire par le ou par chaque conduit (22) d'arrivée.

8. Centrale (44) thermique ayant une turbine (46) à gaz suivant la revendication 7.
